# EUROPEAN PATENT SPECIFICATION

(11) **EP 3 596 364 B1**
(45) Date of publication and mention of the grant of the patent: **09.08.2023**
(21) Application number: 18714027.2
(22) Date of filing: 14.03.2018
(51) Int. Cl.: F16J 15/3248, F16J 15/3284

(54) **COMPOSITE STRUCTURE FOR SEALING PRODUCTS**
VERBUNDSTRUKTUR ZUM ABDICHTEN VON PRODUKTEN
STRUCTURE COMPOSITE POUR SCELLER DES PRODUITS

(30) Priority: 16.03.2017 GB 201704220
(43) Date of publication of application: 22.01.2020
(73) Proprietor: James Walker & Co. Ltd., Woking Surrey GU22 8AP (GB)
(72) Inventor: MCNAMARA, Stuart, Surrey GU22 8AP (GB); REEVES, Robert, Surrey GU22 8AP (GB); SLACHTER, Ewout, Surrey GU22 8AP (GB)
(74) Representative: Hamer, Christopher K.
(86) International application number: PCT/GB2018/050654
(87) International publication number: WO 2018/167488

(56) References cited:
- CN-U- 205 260 839
- US-A- 1 767 936
- US-A- 2 216 291
- US-A- 3 155 566
- US-A1- 2013 059 690
- Plc Nokian Tyres: "REINFORCING MATERIALS IN RUBBER PRODUCTS", aroverket.com/, 1 March 2015 (2015-03-01), XP055808009, Retrieved from the Internet: URL:https://laroverket.com/wp-content/uplo ads/2015/03/reinforcing_materials.pdf [retrieved on 2021-05-27]

## Description

### Field of the Invention

This invention relates to a reinforcing element for a seal, for example a rotary lip seal or a hydraulic seal.

### Background of the Invention

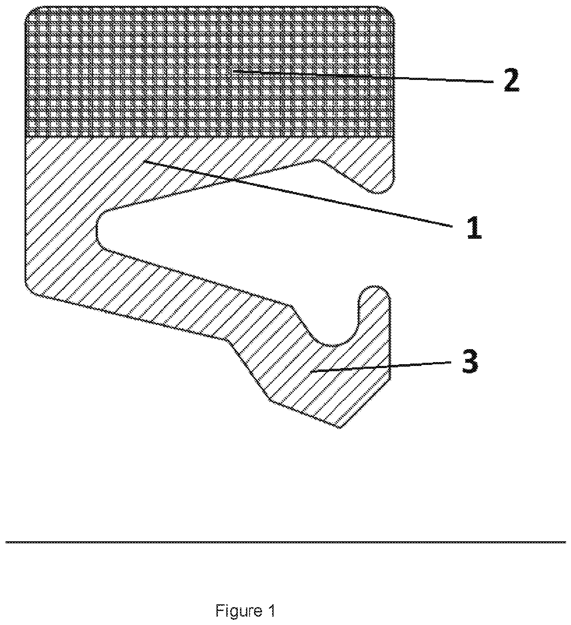

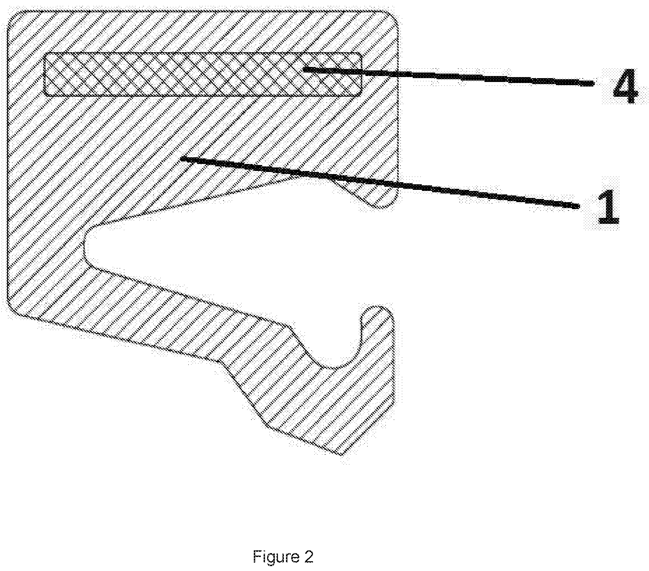

Current state of the art in reinforcing elements for seals typically comprises a woven fabric (2) bonded onto an elastomeric seal body (1), as shown in figure 1, or a machined metallic ring (4) within an identical elastomeric body (1), as shown in figure 2. Rotary lip seals are thus commonly reinforced by a collar of polymer-coated woven fabric (2) or by a metal ring (4). Types of woven fabric (2) that have been used include cotton, glass, aramid, nylon, and blends of these. Types of polymer coating that have been used include nitrile rubber, polychloroprene rubber, highly saturated nitrile rubber (HNBR), and fluoroelastomers. When metal rings (4) are used, these are usually stainless steel rings which can be mechanically secured by perforations or bonded into the polymer back (1). A reinforcement element comprising an annular body of elastomeric material reinforced with a woven fabric is known from e.g. US 3,155,566.

In another example of a rotary lip seal, the reinforcing element comprises a single endless annular twisted steel cable. An example of such a rotary lip seal is the Merkel Radiamatic RPM 41 seal. Other reinforcement elements for a seal, wherein the reinforcement element comprises an annular body of elastomeric material and some wires embedded therein are known from e.g. US 1,767,936 and CN 205260839 U.

The purpose of the reinforcing element such as the woven fabric (2) or the machined metallic ring (4) is to add hoop stiffness to the seal (1), provide a stable attachment point for the lip (3) and to ensure dimensional stability throughout the product's lifespan. In effect, this collar reinforcement prevents seal leakage, both by providing a stable attachment to the sealing lip (3) and, when compressed in a housing, prevents leakage around the back of the seal.

The inventors of the present invention have appreciated that whilst existing rotary lip seals are satisfactory in many respects, there are certain aspects in which their functioning is not ideal. For example, seals that contain a reinforcing element comprising woven fabric bonded to an elastomeric seal body are generally flexible, but do not have sufficient dimensional stability for certain applications. In contrast, seals that comprise a reinforcing element comprising a single metallic element generally have sufficient dimensional stability, but are very stiff, rendering them unsuitable for use in certain applications.

Furthermore, the inventors have appreciated that seals comprising reinforcing elements comprising woven fabric bonded to an elastomeric seal body are prone to the problem of crimping under compressive loads commonly experienced by seals in operation. On application of compressive forces, the woven fabric component of the reinforcing element can be subjected to crimping which can change the properties and dimension of the reinforcing element which can negatively impact the function of the seal. Compressive forces on the seal can be encountered, for example, through fitting of the seal in the machine housing or shrinkage of the polymeric body over time.

### Summary of the Invention

It has now been found that seals having improved properties, overcoming many of the disadvantages discussed above such as improved dimensional stability, can be obtained by replacing the woven fabric with more than one cords (5) arranged in a purely annular or circumferential configuration.

According to an aspect of the invention, there is provided a reinforcing element for a seal, in accordance with claim 1. The reinforcing element comprises an annular body of elastomeric material (1) and more than one non-endless twisted cords in an annular arrangement within said elastomeric material. Preferably, each cord describes at least one annular circuit within the body of elastomeric material.

According to another aspect of the invention, there is provided a reinforcing element for a seal, in accordance with claim 11. The reinforcing element comprises an annular body of elastomeric material and more than one non-endless cords in an annular arrangement within said elastomeric material, wherein the more than one non-endless cords comprise non-twisted unidirectional filaments.

According to another aspect of the invention, there is provided a seal comprising a reinforcing element according to the present invention.

According to another aspect of the invention, there is provided the use of a segment of a reinforcing element of the invention in the formation of a reinforcing element for a seal.

According to another aspect of the invention, there is provided the use of more than one non-endless cords to reinforce a reinforcing element for a rotary seal.

### Brief Description of the Drawings

Figure 1 shows a prior art rotary lip seal including a reinforcing collar made of polymer-coated woven fabric.
Figure 2 shows a prior art rotary lip seal including a metal ring as the reinforcement.

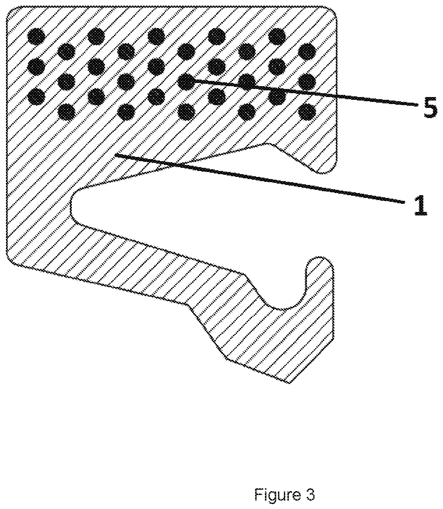

Figure 3 shows a rotary lip seal according to one embodiment of the present invention including the twisted cord reinforcement.
Figure 4 is a schematic diagram depicting a polymer-coated woven fabric in the unstressed state, showing the degree of crimp in the fibres of the reinforcement.
Figure 5 is a schematic diagram depicting buckling of the structure shown in Figure 4 under compressive load.
Figure 6 is a schematic diagram depicting the twisted cords embedded in an elastomeric body according to one embodiment of the present invention.
Figure 7 is a schematic diagram depicting the twisted cords under constant compressive load according to one embodiment of the invention.
Figure 8 is a graph showing the reduction in outside diameter (OD) of the seals after specific numbers of ageing cycles in hot air. The graph compares a seal comprising a glass cord reinforcing element of the invention with a seal comprising a cotton fabric reinforcing element.
Figure 9 is a graph showing the reduction in depth of the seals after specific numbers of ageing cycles in hot air. The graph compares a seal comprising a glass cord reinforcing element of the invention with a seal comprising a cotton fabric reinforcing element.
Figure 10 is a graph showing the reduction in outside diameter (OD) of the seals when exposed to a specific number of thermal cycles in oil. The graph compares seals of the invention comprising a glass cord reinforcing element with seals comprising cotton fabric and glass/aramid fabric.
Figure 11 is a graph showing the reduction in depth of the seals when exposed to a specific number of thermal cycles in oil. The graph compares seals of the invention comprising a glass cord reinforcing element with seals comprising cotton fabric and glass/aramid fabric.
Figure 12 is a graph showing the reduction in outside diameter (OD) of the seals when exposed to a specific number of thermal cycles in hot water. The graph compares a seal comprising a glass cord reinforcing element of the invention with a seal comprising a cotton fabric reinforcing element.
Figure 13 is a graph showing the reduction in depth of the seals when exposed to a specific number of thermal cycles in hot water. The graph compares a seal comprising a glass cord reinforcing element of the invention with a seal comprising a cotton fabric and glass/aramid fabric reinforcing elements.
Figure 14 is a graph showing change in outside diameter (OD) of rotary seals upon fitting into a housing. The graph compares seals of the invention comprising glass cord with seals comprising cotton fabric reinforcing elements.
Figure 15 is a graph showing change in depth of rotary seals upon fitting into a housing. The graph compares seals of the invention comprising glass cord with seals comprising cotton fabric reinforcing elements.
Figure 16 is a graph showing the change in weight of seals over various cycles of usage. The graph compares seals containing glass cords with seals containing cotton fabric reinforcing elements.
Figure 17 is a graph showing the change in weight of seals over various oil cycles. The graph compares seals containing glass cord reinforcing elements with seals containing cotton fabric and glass/aramid fabric reinforcing elements.
Figure 18 is a graph showing the change in weight of seals over various water cycles. The graph compares seals containing glass cord reinforcing elements with seals containing cotton fabric and glass/aramid fabric reinforcing elements.

### Description of Various Embodiments

It has been found that seals including a reinforcing element according to the invention possess a number of advantages in comparison with seals that include a conventional polymer-coated fabric or metal ring reinforcement. For example:
- The reinforcing element according to the invention gives improved dimensional stability, both in terms of outside diameter and depth while retaining flexibility. This is an improvement over seals comprising a reinforcing element comprising a woven fabric (2) bonded onto an elastomeric seal body (1) which typically have lower dimensional stability than seals comprising reinforcing elements of the present invention, and an improvement over seals comprising a reinforcing element comprising a machined metallic ring (4) within an identical elastomeric body (1) which typically have sufficient dimensional stability, whilst being very stiff and lacking sufficient flexibility.
- Properties such as stiffness and dimensional stability can be further adjusted by varying the number of annular circuits described by the cords within the reinforcing element. Properties can also be adjusted by varying the material and diameter of the cords. Seals and reinforcing elements according to the present invention can thus be tailored so as to achieve specifically desired properties for a given function.
- Cord can replace woven fabric types such as cotton, nylon, aramid, carbon and combinations of these.

The reinforcement can be completely encapsulated and is therefore protected from external environments, providing excellent ageing resistance.

The above advantages have surprisingly been found to be associated with the use of cords such as those comprising glass fibers. Glass fibers such as twisted glass fibres have thus far not been used in rotary lip seals or any other variety of seal to provide the advantages discussed above. While twisted glass fibres have previously been used in automotive products such as door seals and timing belts, the fibers have been used in a different manner to provide different advantages and solve different problems to those discussed above. For example, when previously used in automotive products such as door seals and timing belts, the reinforcing cords are used in tension rather than compression as per the reinforcing element of the invention. The advantageous effects associated with using twisted glass fibers when subjected to compressive forces can thus not be predicted from previous uses of twisted glass fibers. The advantageous behaviour of the twisted glass fibers when subjected to compressive forces will be discussed in more detail below.

The reinforcing elements according to the present invention comprise an annular body of elastomeric material. The term elastomeric material is readily understood by the person skilled in the art and is used to refer to an elastic polymer that can be deformed by force, before resuming its original shape when the deforming force is removed. Examples of elastomers include natural and synthetic rubbers, and the terms "rubber" and "elastomer" are often used interchangeably. The elastomeric materials used in the present invention are typically designed to withstand temperatures that the elastomer will encounter in use in a seal, chemical media and abrasion.

The term "annular body" and "annular arrangement" as used herein are typically used to refer to a ring like structure, with a hole in the middle for receiving a cylindrical body. The term annular body of elastomeric material is thus used to refer to a ring-like body of elastomeric material surrounding a hole in the middle of the body within which a cylindrical body is received. The cylindrical body is not part of the "seal" as described herein. It will be appreciated by those skilled in the art that while the annular body of elastomeric material goes around the circumference of the cylindrical body, it does not need to be in immediate contact with the cylindrical body, since there may be a component of the seal between the seal (1) and cylindrical body such as a lip (3), as shown in figure 1. The lip (3) can also be described as annular since it will also form a ring-like structure surrounding a hole that may receive a cylindrical body.

The more than one non-endless cords are in an annular arrangement within said elastomeric material. This means that the cords extend around the annular elastomeric body such that they encircle the hole in the middle of the annular seal and any cylindrical body received therein. However, it is not essential that the twisted cords extend around the entirety of the annular body of elastomeric material to completely encircle the hole. The term annular arrangement, as used herein, thus refers to the scenario where the cords extend around at least a portion of the annular body to at least partly encircle the hole. Preferably, each cord extends around the entire elastomeric body thus encircling the hole at least once.

Where it is described that each cord describes at least one annular circuit within the body of elastomeric material, this is used to refer to the scenario where each cord extends from one end to another at least once around the annular body of elastomeric material such that each cord extends around the hole in the middle of the annular body at least once.

In reinforcing elements of the invention, each cord preferably describes at least one annular circuit within the body of elastomeric material. Preferably, each cord describes more than one annular circuit within the body of elastomeric material, for example, from 1 to 5 annular circuits within the body of elastomeric material. It should be noted that each cord may describe a non-integer number of annular circuits within the body of elastomeric material such as 1.25, 1.5 or 1.75.

The more than one cords in the reinforcing elements of the present invention are non-endless. This means that each cord has two specific ends. This is in contrast to an endless ring structure where a cord/ring would not have two specifically defined ends and forms a continuous circular cord.

The reinforcing elements of the present invention are for use in seals. Preferably, the reinforcing elements are for use in seals, such as rotary lip seals. The terms rotary lip seal and radial shaft seal as used herein, are used synonymously. Rotary seals are typically designed with a lip and so are rotary lip seals. They are typically used to seal against a rotating shaft and a back support ring constrained within a housing. The term housing, as used herein, typically refers to a static fixture designed to receive a seal back and to hold the seal around the rotating or reciprocating shaft. A seal back is typically understood to refer to an elastomer ring designed to retain the seal in a constrained or unconstrained housing, preventing leakage around the back of the seal and provide a continuous attachment point for the lip of the seal, if present. The term seal lip, as used herein, typically refers to the flexible part of the seal designed to maintain a fluid film in dynamic motion, and hold back pressure in static conditions. An example of a rotary lip seal (not according to the invention) is shown in figure 1 where the lip (3) contacts a shaft or rotating bore. The rotary lip seal will typically form an annular structure extending around the circumference of the shaft. The reinforcing elements of the present invention may also be used with hydraulic seals. The term hydraulic seal, as used herein, typically refers to several dual lip seals contained within a housing with one lip sealing against a reciprocating shaft and the other against the static housing wall.

The term reinforcing element, as used herein, typically refers to the component of the seal back designed to maintain dimensional stability and resistance to compression of the seal back. In certain embodiments, the seal back consists of the reinforcing element of the invention. In other embodiments, the seal back may comprise the reinforcing element of the invention along with additional elastomeric material.

In an embodiment, the reinforcement of the reinforcing element consists of the more than one non-endless cords.

The cords used in the reinforcing element according to the present invention typically comprise a material that has a stiffness and/or dimensional stability greater than the elastomeric seal body. Preferably, the twisted cords have a stiffness and dimensional stability greater than the elastomeric material.

The more than one cords do not comprise metal and/or woven fabric. Woven fabric, as used herein, typically refers to a series of warp and weft yarns which are overlaid and crossed at regular intervals. Metallic reinforcements such as those of the prior art typically comprise a circular metal band or "L-shaped" section used to maintain the shape and dimensions of the seal. Preferably, the more than one cords comprise glass, such as glass fibers. In an embodiment, the one or more twisted cords comprise filament E-glass twisted fiber.

Prior art reinforcing elements that comprise fabric may comprise woven glass material such as glass wool like material as part of the fabric. However, this glass wool like fabric is different from the glass fibers that may be used in the cords of the present invention for a variety of reasons. For example, glass material used in prior art reinforcing elements is of a woven structure comprising warp and weft yarns whereas when used in the invention, the glass material comprises unidirectional strands which are preferably twisted.

Each cord preferably has a diameter in the range of from 0.1 mm to 5 mm, more preferably 0.1 mm to 3 mm, most preferably from 0.2 mm to 1.5 mm, with an optimum of about 0.5 mm to 1.2 mm.

Preferably, each twisted cord comprises twisted glass fibers. Preferably, the more than one cords comprise glass fibers with a cord diameter of from 0.5 mm to 1.2 mm. In this embodiment, the glass fibers are preferably continuous filament E glass fibers.

The one or more cords used in the reinforcing elements according to a first aspect of the invention are twisted. The term "twisted" as used herein in the context of a twisted cord is typically used to refer to a "rope like" structure where the cord comprises many hundreds of fine filaments which have been twisted together to form a strand. Several of these strands are then plied together to create a twisted cord.

Preferably, the one or more twisted cords are twisted in an amount of from 1 to 300 twists per metre, more preferably from 20 to 200 twists per metre, and most preferably from 35 to 150 twists per metre. One twist is defined as rotating a portion of the filament 360° whilst keeping an adjacent section of the filament at a constant position.

Each twisted cord can comprise any suitable number of strands as to form a braided structure. For example, each twisted cord may comprise two or more strands. Preferably, each twisted cord comprises from 1 to 20 strands. More preferably the twisted cord comprises 1 to 13 strands.

Where the non-endless twisted cords comprise twisted fibers such as glass fibers, the filaments that make up each individual strand may be bonded together with a suitable bonding agent. Examples of suitable bonding agents will be known to the skilled person. In an embodiment, the bonding agent comprises a resorcinol formaldehyde latex (RFL).

In an alternative embodiment, the cords used in the reinforcing elements according to a second aspect of the present invention are non-twisted. The cords comprise non-twisted unidirectional filaments/fibres, such as unidirectional glass fibers/filaments. In this embodiment, the reinforcing elements and cords may have any of the properties and features discussed above, with the proviso that the cords are not twisted. Preferably, in this embodiment, the cords comprise strands of fibre such as glass fibre bonded together. However, unlike the embodiment described above where the strands comprise twisted filaments, the filaments of each strand are non-twisted and unidirectional.

The reinforcing elements of the invention comprise more than one non-endless cords. Typically, the reinforcing element comprises two or more non-endless cords. Preferably, the reinforcing element comprises from 2 to 100 non-endless cords, and most preferably from 2 to 50 non-endless cords. Preferably, the cords are twisted.

The distribution of the cords within the reinforcing element can be in any ordered or random configuration in the annular body of elastomeric material.

Typically, the annular body of elastomeric material completely encapsulates the non-endless cords. In other words, all sections of the cord, including both ends, are surrounded by the body of elastomeric material. This is in contrast to the known reinforcing elements shown in figure 1 where elastomeric material is bonded to woven fabric, but the fabric is not necessarily encapsulated by the elastomeric material.

The elastomeric material can be any elastomer material suitable for the sealing application. Preferably, the elastomeric material comprises a nitrile rubber (NBR), a hydrogenated nitrile rubber (HNBR), a fluorocarbon rubber (FKM), polyurethane (PU) or combinations thereof.

In one example of a reinforcing element according to the invention, the reinforcing element comprises twisted glass fibre cord, said cord comprising twisted filament E-glass fibre having a diameter of 0.8 mm, and the individual filaments of said strands preferably being bonded in resorcinol formaldehyde latex (RFL.)

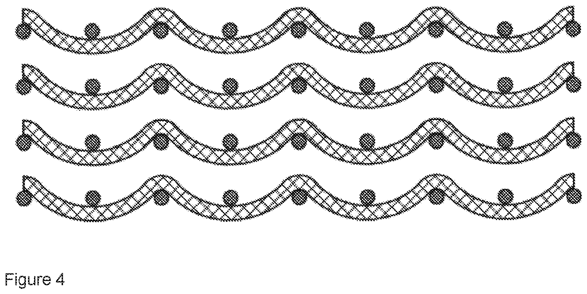

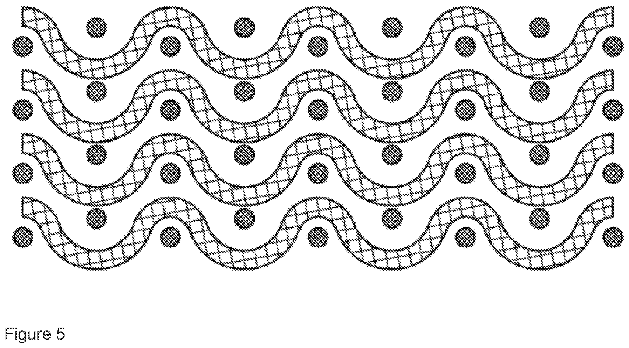

In conventional polymer-coated fabric reinforcements for e.g. a rotary lip seal, the fibres are arranged in a biaxially woven configuration as shown in figure 4. In figures 4 and 5, a first set of fibers extending in one direction are visible along a length of the fibers. The cross section of a second set of fibers extending in a perpendicular direction to the first set of fibers is also visible.

Typically, the ratio of polymer to fabric in known reinforcing elements lies in the range from 30:70 to 70:30 by volume. Owing to the nature of the weave structure, significant and permanent crimping as shown in figure 5 can be imparted to the fabric and seal when loaded in compression either through fitting of the seal in the machine housing or due to the long term shrinkage of the polymeric body. Crimping in the context of fibers is typically understood to refer to the process of the fiber being compressed such that it buckles and forms small folds and ridges.

This change in properties and dimension of the fiber on crimping can negatively impact upon the function of the seal.

The effect of crimp in the woven fabric is shown schematically in Figure 4. Buckling of the structure under compressive load is shown schematically in Figure 5.

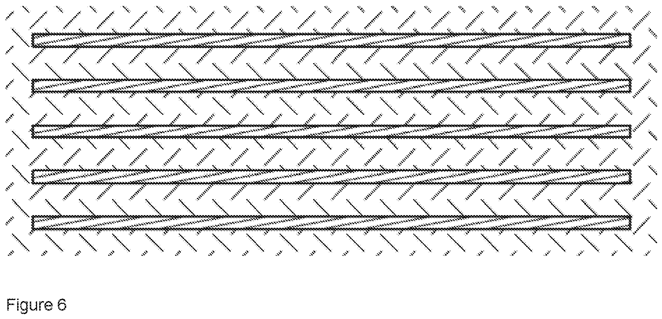

In contrast, in the present invention, the cords of the reinforcing element are arranged uniaxially and act as reinforcing columns, as shown in figure 6, e.g. in the backing of a rotary lip seal.

Whereas typical industrial applications for twisted filament cords put these in tension, (e.g. timing belts in automotive applications) in the invention the cords resist compressive loads.

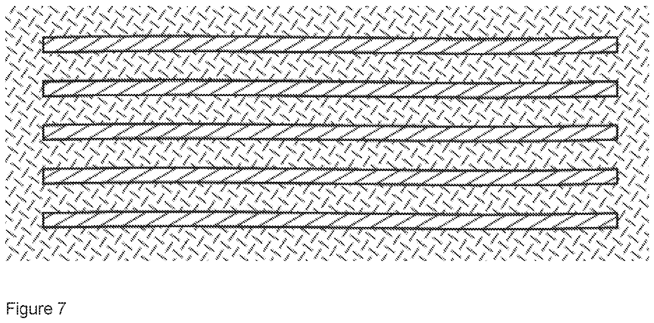

According to the invention, the cords resist compressive forces highly effectively due to a combination of the fibre alignment in the direction of compressive loads and the surrounding elastomeric material preventing the cord from buckling under the compressive loads seen in typical sealing applications, as shown in figure 7.

As a result of the increased effectiveness of the invention, the ratio of elastomeric material to cord can be increased to within the range from 70:30 to 99:1 by volume, such as 80:20 to 99:1 by volume, depending on the properties required. Thus, reinforcing elements of the invention may have a ratio of elastomeric material to cord in a range of from 70:30 to 99:1 by volume. Preferably, the ratio of elastomeric material to twisted cord is from 75:25 to 99:1, more preferably 80:20 to 99:1, and optionally from 90:10 to 99:1 by volume.

As mentioned above, the cord used in the invention preferably comprises twisted filament glass fibre. The twist within the braided structure of the cord allows the cord to be bent around any radius without adverse effects to its structure.

According to an aspect of the invention, there is provided the use of a segment of a seal containing the reinforcing element of the invention, in the formation of a seal containing multiple segments including their respective reinforcing elements. This technique may be employed to manufacture large diameter seals.

According to an aspect of this invention, there is provided the use of a split seal containing an equally split reinforcing element according to the invention, that can be rejoined into a continuous annular ring in the field where the machine shaft or piston cannot be readily removed.

In the scenario described above, if two or more segments of the reinforcing elements of the invention are included in the complete rotary seal ring, it is possible that the ends of two cords in separate segments align exactly. In this scenario, each cord would still be considered "non-endless" since the segments are not welded together to form one continuous cord.

It will be understood that the present invention has been described above purely by way of example, and modification of detail can be made within the scope of the invention. Each feature disclosed in the description and, where appropriate, the claims and drawings may be provided independently or in any appropriate combination, the scope of the invention being determined by the appended claims only.

### Examples

Rotary lip seals comprising reinforcing elements of the invention were constructed. The reinforcing elements contained twisted cords comprising glass fibers as per the invention. The rotary seals were thermally cycled whilst exposed to various media relevant to their field use, namely air, oil and water. This was to assess the durability and performance properties of seals comprising reinforcing elements of the invention and providing a comparison to two commonly used woven fabric constructions namely elastomer coated woven cotton (cotton fabric) and elastomer coated woven glass/aramid (glass/aramid fabric).

In all examples, the seals of the invention comprise reinforcing elements comprising twisted glass cords of a diameter of 0.8 mm. The twisted glass cords are each formed from 6 strands that are plied together with a bonding agent. Each strand comprises E glass filament fibres that are twisted together with a degree of twisting of 80 twists per metre. Each E glass filament fibre has a diameter of 9 micrometers.

In all examples, the initial dimeter of each rotary seal was 201.4 mm. Each seal was placed into a housing of 200 mm diameter (thus corresponding to 0.7% compression) with a nominal depth of 16 mm.

### Example 1

Outside Diameter (OD) and Depth (D) were recorded from all unaged seals. Several of each type of seal was then fitted into identical housings before being subjected to 4 thermal cycles (ambient to 80ºC) over a 1 week period immersed in Air, Oil and Water.

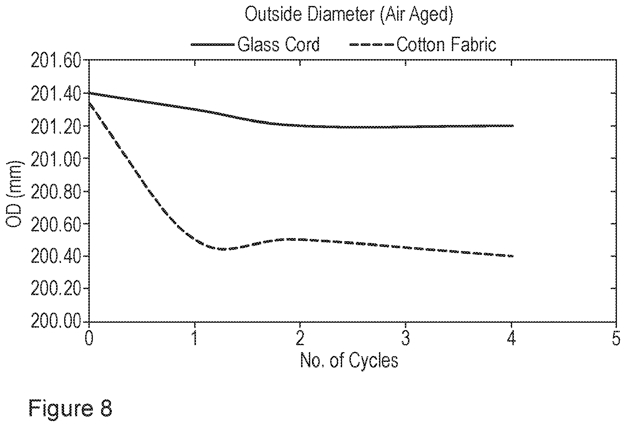

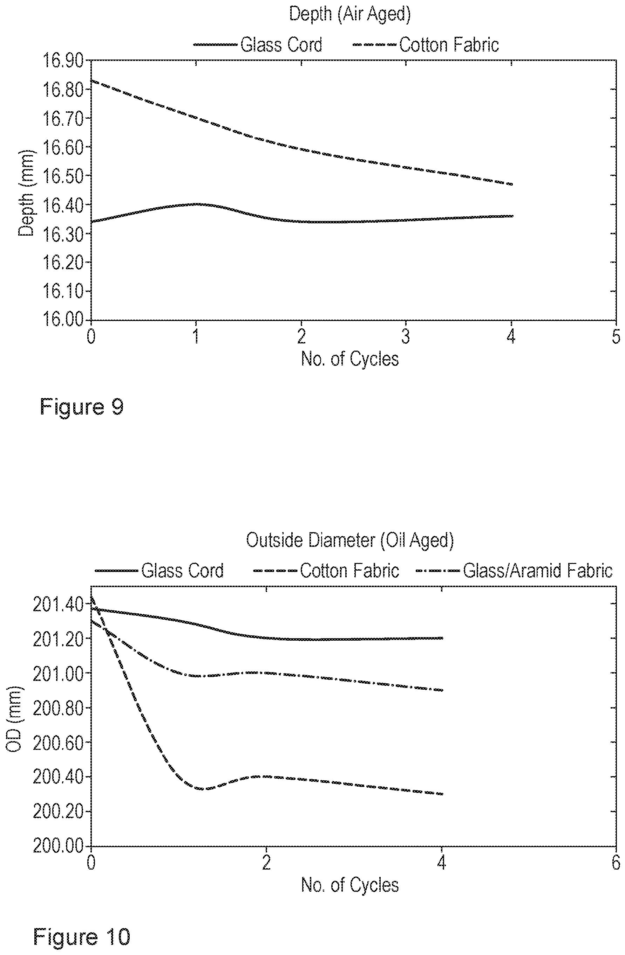

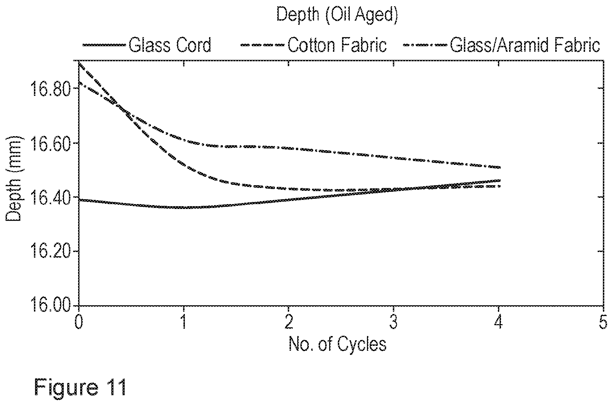

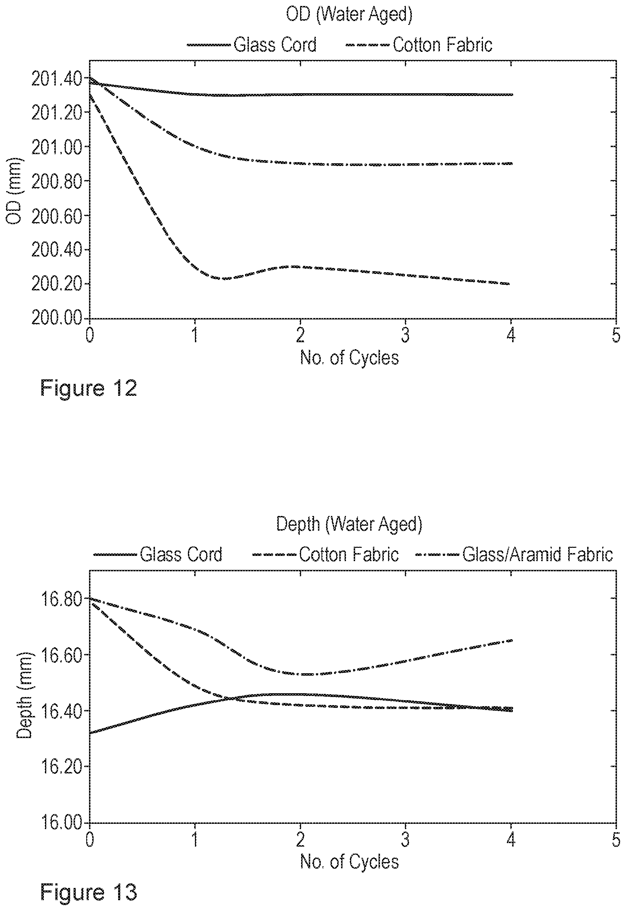

During these tests the changes in diameter and depth of the seals were monitored and the results are shown in Figures 8 to 13.

The seal containing glass cord (comprising reinforcement elements of the preferred makeup of the invention) shows smaller changes in both OD and depth when compared to both conventional fabric reinforcements (prior art). The improved dimensional stability of the seals containing the reinforcing element of the invention is a key advantage over existing technologies when fitted or when unfitted during long term storage prior to use. Dimensional change, usually shrinkage, during storage or service is a common problem of conventional fabric based technologies. After fitting, where the back of the seal is maintaining a constant outward pressure on the housing and where there is a recoverable compression of depth against the base of the housing, the retaining plate prevents leakage round the back of the seal during use.

### Example 2

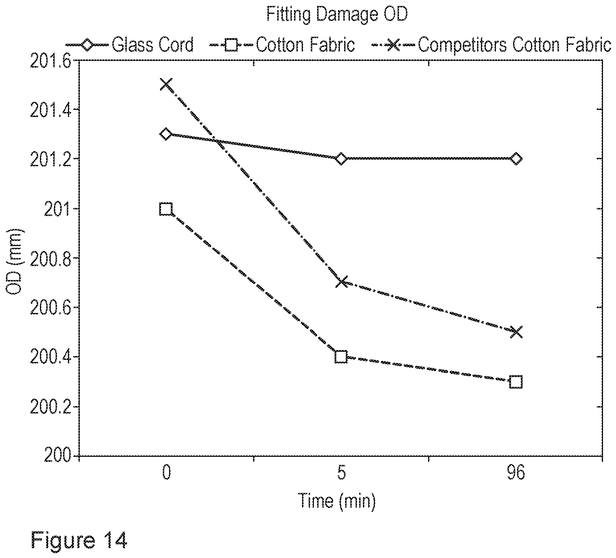

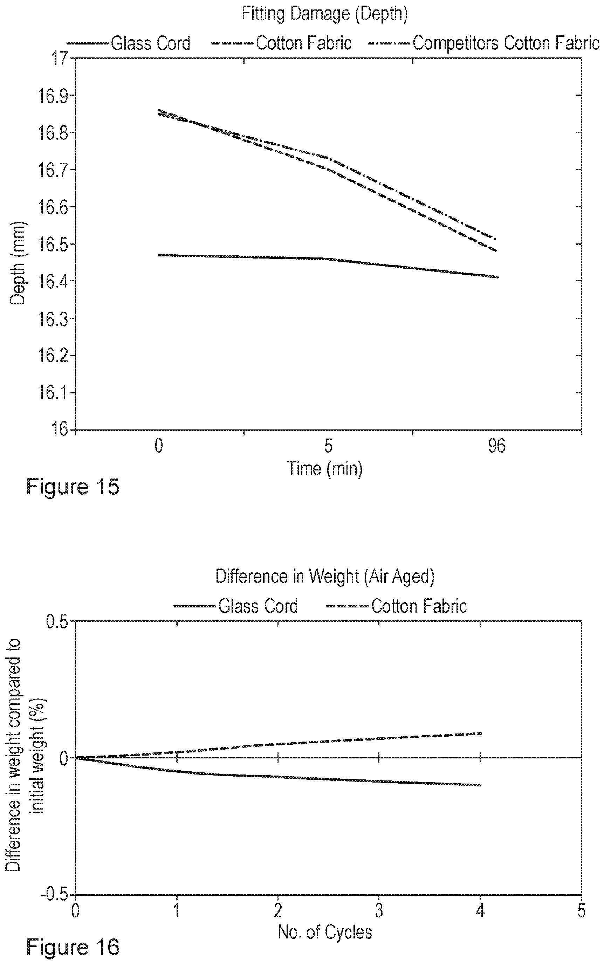

The change in dimensions during fitting were assessed on seals of the invention containing glass cord compared to conventional cotton fabric reinforcements (prior art). Results were assessed after 5 minutes after fitting at ambient temperature and after 96 minutes after fitting at ambient temperature. See figures 14 and 15.

Experiments confirm that, for prior-art cotton fabric technology, a large proportion of the permanent dimensional changes occur within the first 5 minutes after fitting. After 96 minutes, 100% of the permanent damage shown in example 1 has already occurred within this time. In the seals containing glass cord, comprising reinforcement elements of the invention, dimensional changes are minor and dimensions are maintained throughout the long term testing in example 1.

### Example 3

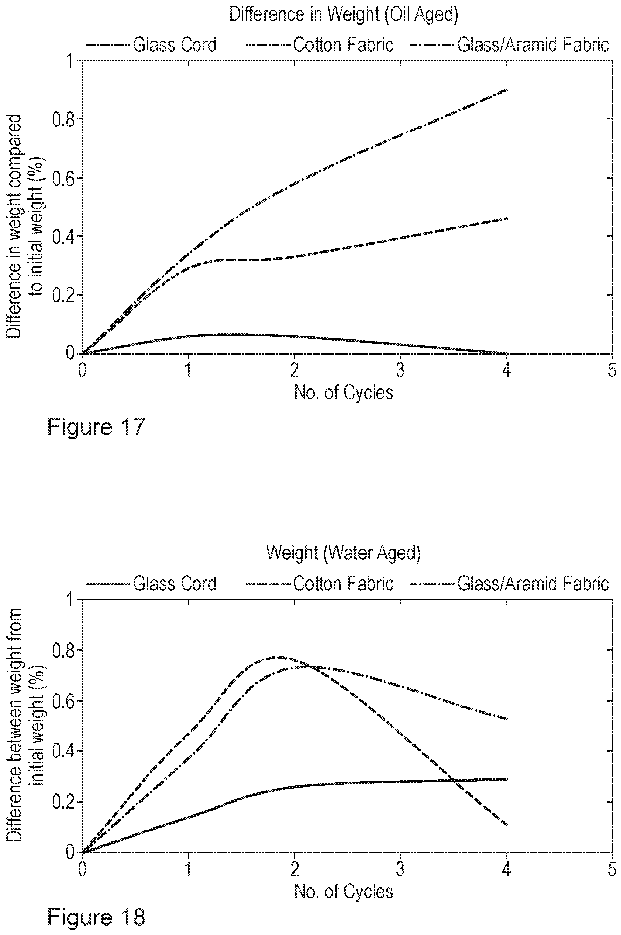

Each type of seal was weighed before and after thermal cycling in example 1 to assess the uptake of fluids. Weight changes for the seals are recorded in Figures 16 to 18.

The weight change for the seals containing glass cord, comprising reinforcement elements of the invention is substantially less than conventional technologies. Woven fabric of prior art seals is coated with solvated elastomers to provide a liquid barrier. However it is impossible to completely "wet" all the fibre bundles and cut ends exist at the outer surface of the seal allowing wicking of liquids into the fabric structure.

## Claims

1. A reinforcing element for a seal (1), wherein the reinforcing element comprises an annular body of elastomeric material and more than one non-endless twisted cords (5) in an annular arrangement within said elastomeric material; wherein the more than one non-endless cords do not comprise metal or woven fabric; and wherein the more than one non-endless cords comprise glass fibre, carbon fibre, aramid fibre, cotton, cellulose, nylon, polyester, PET or combinations thereof; and wherein the more than one non-endless cords are arranged uniaxially; optionally wherein the seal (1) comprises a rotary lip seal or a hydraulic seal.

2. A reinforcing element according to any preceding claim, wherein (i) the more than one non-endless cords have a stiffness and/or dimensional stability greater than the elastomeric material; (ii) wherein said cords are distributed at random or orderly within the elastomeric body; (iii) wherein each cord describes at least one annular circuit within the body of elastomeric material; (iv) wherein each cord describes more than one annular circuit within the body of elastomeric material; and/or (v) wherein each cord describes at least two annular circuits within the body of elastomeric material.

3. A reinforcing element according to any preceding claim, wherein (i) the reinforcing element comprises more than two non-endless cords; (ii) the reinforcing element comprises from 2 to 100 non-endless cords, and preferably from 2 to 50 non-endless cords.

4. A reinforcing element according to any preceding claim, wherein the more than one non-endless twisted cords are twisted in an amount of from 1 to 300 twists per metre of cord, preferably from 20 to 200 twists per metre of cord, and most preferably from 35 to 150 twists per metre of cord.

5. A reinforcing element according to any preceding claim, wherein the more than one non-endless twisted cords comprise one or more glass strands, wherein the one or more glass strands are twisted so as to form a twisted cord, optionally wherein the more than one non-endless cords each comprise from 1 to 20 glass strands, and preferably from 1 to 13 strands.

6. A reinforcing element according to any preceding claim, wherein (i) the more than one non-endless cords comprise glass fibre, carbon fibre, aramid fibre, or combinations thereof, preferably wherein the more than one cords comprise glass fibre, more preferably wherein the more than one non-endless cords comprise filament E-glass twisted cord; and/or (ii) the elastomeric material comprises nitrile rubber (NBR), a hydrogenated nitrile rubber (HNBR) a fluorocarbon rubber (FKM), polyurethane, or any combination thereof.

7. A reinforcing element according to any preceding claim, wherein the more than one non-endless cords are coated with one or more bonding agents, one or more protective agents, or combinations thereof.

8. A reinforcing element according to any preceding claim, wherein the more than one cords have a diameter of from 0.1 to 5 mm, preferably from 0.1 to 3 mm, more preferably from 0.2 to 1.5 mm, and most preferably from 0.5 to 1.2 mm.

9. A reinforcing element according to any preceding claim, wherein the ratio of elastomeric material to cord is in the range of 70:30 to 99:1 by volume, preferably wherein the ratio of elastomeric material to cord is in the range from 80:20 to 99:1 by volume, and most preferably wherein the ratio of elastomeric material to cord is in the range of 90:10 to 99:1 by volume.

10. A reinforcing element according to any preceding claim, wherein the elastomeric material completely encapsulates the more than one non-endless cords, and/or wherein the more than one cords are of a braided construction.

11. A reinforcing element for a seal (1), wherein the reinforcing element comprises an annular body of elastomeric material and more than one non-endless cords (5) in an annular arrangement within said elastomeric material, wherein the more than one non-endless cords comprise non-twisted unidirectional filaments; wherein the more than one non-endless cords do not comprise metal or woven fabric; and wherein the more than one non-endless cords comprise glass fibre, carbon fibre, aramid fibre, cotton, cellulose, nylon, polyester, PET or combinations thereof; and wherein the more than one non-endless cords are arranged uniaxially.

12. A seal comprising: (i) a sealing element comprising an annular body of elastomeric material; and (ii) a reinforcing element according to any preceding claim, optionally wherein the seal is a rotary lip seal or a hydraulic seal.

13. Use of a segment of a reinforcing element according to any one of claims 1 to 11 in the formation of a reinforcing element for a seal.

14. Use of more than one non-endless cord to reinforce a reinforcing element for a seal, wherein the reinforcing element is according to any one of claims 1 to 11.

## Patentansprüche

1. Ein Verstärkungselement für eine Dichtung (1), wobei das Verstärkungselement einen ringförmigen Körper aus Elastomermaterial und mehr als einen nicht endlosen verdrillten Faden (5) in einer ringförmigen Anordnung innerhalb des genannten Elastomermaterials umfasst; wobei die mehr als einer nicht endlosen Fäden kein Metall oder Gewebe umfassen; und wobei die mehr als einer nicht endlosen Fäden Glasfaser, Kohlefaser, Aramidfaser, Baumwolle, Cellulose, Nylon, Polyester, PET oder Kombinationen davon umfassen; und wobei die mehr als einer nicht endlosen Fäden uniaxial angeordnet sind; wobei optional die Dichtung (1) eine Radiallippendichtung oder eine Hydraulikdichtung umfasst.

2. Ein Verstärkungselement gemäß einem vorhergehenden Anspruch, wobei (i) die mehr als einer nicht endlosen Fäden eine Steifheit und/oder Dimensionsstabilität aufweisen, die größer als das Elastomermaterial sind/ist;
(ii) wobei die genannten Fäden innerhalb des Elastomerkörpers wahllos oder geordnet verteilt sind; (iii) wobei jeder Faden mindestens einen ringförmigen Kreis innerhalb des Körpers aus Elastomermaterial beschreibt;
(iv) wobei jeder Faden mehr als einen ringförmigen Kreis innerhalb des Körpers aus Elastomermaterial beschreibt; und/oder (v) wobei jeder Faden mindestens zwei ringförmige Kreise innerhalb des Körpers aus Elastomermaterial beschreibt.

3. Ein Verstärkungselement gemäß einem vorhergehenden Anspruch, wobei (i) das Verstärkungselement mehr als zwei nicht endlose Fäden umfasst; (ii) das Verstärkungselement von 2 bis 100 nicht endlose Fäden und bevorzugt von 2 bis 50 nicht endlose Fäden umfasst.

4. Ein Verstärkungselement gemäß einem vorhergehenden Anspruch, wobei die mehr als einer nicht endlosen verdrillten Fäden in einer Menge von 1 bis 300 Verdrillungen pro Meter Faden, bevorzugt von 20 bis 200 Verdrillungen pro Meter Faden und am bevorzugtesten von 35 bis 150 Verdrillungen pro Meter Faden verdrillt sind.

5. Ein Verstärkungselement gemäß einem vorhergehenden Anspruch, wobei die mehr als einer nicht endlosen verdrillten Fäden einen oder mehrere Glasstränge umfassen, wobei der eine oder die mehreren Glasstränge verdrillt sind, um einen verdrillten Faden zu bilden, wobei optional die mehr als einer nicht endlosen Fäden jeweils von 1 bis 20 Glasstränge und bevorzugt von 1 bis 13 Stränge umfassen.

6. Ein Verstärkungselement gemäß einem vorhergehenden Anspruch, wobei (i) die mehr als einer nicht endlosen Fäden Glasfaser, Kohlenfaser, Aramidfaser oder Kombinationen davon umfassen, wobei bevorzugt die mehr als einer Fäden Glasfaser umfassen, wobei bevorzugter die mehr als einer nicht endlosen Fäden verdrillten Filament-E-Glasfaden umfassen; und/oder (ii) das Elastomermaterial Nitrilkautschuk (NBR), einen hydrierten Nitrilkautschuk (HNBR), einen Fluorkohlenstoffkautschuk (FKM), Polyurethan oder eine Kombination davon umfasst.

7. Ein Verstärkungselement gemäß einem vorhergehenden Anspruch, wobei die mehr als einer nicht endlosen Fäden mit einem oder mehreren Bindemitteln, einem oder mehreren Schutzmitteln oder Kombinationen davon beschichtet sind.

8. Ein Verstärkungselement gemäß einem vorhergehenden Anspruch, wobei die mehr als einer Fäden einen Durchmesser von 0,1 bis 5 mm, bevorzugt von 0,1 bis 3 mm, bevorzugter von 0,2 bis 1,5 mm und am bevorzugtesten von 0,5 bis 1,2 mm aufweisen.

9. Ein Verstärkungselement gemäß einem vorhergehenden Anspruch, wobei das Verhältnis von Elastomermaterial zu Faden im Bereich von 70 : 30 bis 99 : 1 nach Volumen liegt, wobei bevorzugt das Verhältnis von Elastomermaterial zu Faden im Bereich von 80 : 20 bis 99 : 1 nach Volumen liegt und wobei am bevorzugtesten das Verhältnis von Elastomermaterial zu Faden im Bereich von 90 : 10 bis 99 : 1 nach Volumen liegt.

10. Ein Verstärkungselement gemäß einem vorhergehenden Anspruch, wobei das Elastomermaterial die mehr als einer nicht endlosen Fäden vollständig einkapselt und/oder wobei die mehr als einer Fäden von einer geflochtenen Konstruktion sind.

11. Ein Verstärkungselement für eine Dichtung (1), wobei das Verstärkungselement einen ringförmigen Körper aus Elastomermaterial und mehr als einen nicht endlosen Faden (5) in einer ringförmigen Anordnung innerhalb des genannten Elastomermaterials umfasst, wobei die mehr als einer nicht endlosen Fäden nicht gezwirnte eindirektionale Filamente umfassen; wobei die mehr als einer nicht endlosen Fäden kein Metall oder Gewebe umfassen; und wobei die mehr als einer nicht endlosen Fäden Glasfaser, Kohlefaser, Aramidfaser, Baumwolle, Cellulose, Nylon, Polyester, PET oder Kombinationen davon umfassen; und wobei die mehr als einer nicht endlosen Fäden uniaxial angeordnet sind.

12. Eine Dichtung, umfassend: (i) ein Dichtungselement, umfassend einen ringförmigen Körper aus Elastomermaterial; und (ii) ein Verstärkungselement gemäß einem vorhergehenden Anspruch, wobei optional die Dichtung eine Radiallippendichtung oder eine Hydraulikdichtung ist.

13. Verwendung eines Segments eines Verstärkungselements gemäß einem der Ansprüche 1 bis 11 bei der Bildung eines Verstärkungselements für eine Dichtung.

14. Verwendung von mehr als einem nicht endlosen Faden, um ein Verstärkungselement für eine Dichtung zu verstärken, wobei das Verstärkungselement gemäß einem der Ansprüche 1 bis 11 ist.

## Revendications

1. Elément de renforcement pour un joint (1), l'élément de renforcement comprenant un corps annulaire de matériau élastomère et au moins un cordon torsadé non sans fin (5) dans un agencement annulaire au sein dudit matériau élastomère ; dans lequel l'au moins un cordon non sans fin ne comprend pas de métal ou de tissu ; et dans lequel l'au moins un cordon non sans fin comprend de la fibre de verre, de la fibre de carbone, de la fibre d'aramide, du coton, de la cellulose, du nylon, du polyester, du PET ou des combinaisons de ceux-ci ; et dans lequel l'au moins un cordon non sans fin est disposé uniaxialement ; éventuellement dans lequel le joint (1) comprend un joint à lèvre rotatif ou un joint hydraulique.

2. Elément de renforcement selon n'importe quelle revendication précédente, dans lequel (i) l'au moins un cordon non sans fin a une rigidité et/ou une stabilité dimensionnelle supérieure à celle(s) du matériau élastomère ; (ii) dans lequel lesdits cordons sont répartis de manière aléatoire ou ordonnée au sein du corps élastomère ; iii) dans lequel chaque cordon décrit au moins un circuit annulaire au sein du corps de matériau élastomère ; (iv) dans lequel chaque cordon décrit plus d'un circuit annulaire dans le corps de matériau élastomère ; et/ou (v) dans lequel chaque cordon décrit au moins deux circuits annulaires dans le corps de matériau élastomère.

3. Elément de renforcement selon n'importe quelle revendication précédente, (i) l'élément de renforcement comprenant plus de deux cordons non sans fin ; ii) l'élément de renforcement comprenant de 2 à 100 cordons non sans fin, et de préférence de 2 à 50 cordons non sans fin.

4. Elément de renforcement selon n'importe quelle revendication précédente, dans lequel l'au moins un cordon torsadé non sans fin est torsadé à raison de 1 à 300 torsades par mètre de cordon, de préférence de 20 à 200 torsades par mètre de cordon, et idéalement de 35 à 150 torsades par mètre de cordon.

5. Elément de renforcement selon n'importe quelle revendication précédente, dans lequel l'au moins un cordon torsadé non sans fin comprend un ou plusieurs brins de verre, dans lequel les un ou plusieurs brins de verre sont torsadés de manière à former un cordon torsadé, éventuellement dans lequel chaque au moins un cordon non sans fin comprend de 1 à 20 brins de verre, et de préférence de 1 à 13 brins.

6. Elément de renforcement selon n'importe quelle revendication précédente, dans lequel (i) l'au moins un cordon non sans fin comprend de la fibre de verre, de la fibre de carbone, de la fibre d'aramide, ou des combinaisons de ceux-ci, de préférence dans lequel l'au moins un cordon sans fin comprend de la fibre de verre, plus préférentiellement dans lequel l'au moins un cordon non sans fin comprend un cordon torsadé en filament de verre E ; et/ou (ii) le matériau élastomère comprend du caoutchouc nitrile (NBR), un caoutchouc nitrile hydrogéné (HNBR), un caoutchouc fluorocarboné (FKM), du polyuréthane ou toute combinaison de ceux-ci.

7. Elément de renforcement selon n'importe quelle revendication précédente, dans lequel l'au moins un cordon non sans fin est recouvert d'un ou plusieurs agents de liaison, d'un ou plusieurs agents de protection, ou de combinaisons de ceux-ci.

8. Elément de renforcement selon n'importe quelle revendication précédente, dans lequel l'au moins un cordon a un diamètre de 0,1 à 5 mm, de préférence de 0,1 à 3 mm, d'une manière davantage préférée de 0,2 à 1,5 mm, et idéalement de 0,5 à 1,2 mm.

9. Elément de renforcement selon n'importe quelle revendication précédente, dans lequel le rapport matière élastomère/cordon est compris dans la plage de 70 :30 à 99 :1 en volume, de préférence dans lequel le rapport matière élastomère/cordon est compris dans la plage de 80 :20 à 99 :1 en volume, et idéalement dans lequel le rapport matière élastomère/corde est compris dans la plage de 90 :10 à 99 :1 en volume.

10. Elément de renforcement selon n'importe quelle revendication précédente, dans lequel le matériau élastomère encapsule complètement l'au moins un cordon non sans fin, et/ou dans lequel l'au moins un cordon est une construction tressée.

11. Elément de renforcement pour un joint (1), l'élément de renforcement comprenant un corps annulaire de matériau élastomère et au moins un cordon non sans fin (5) dans un agencement annulaire au sein dudit matériau élastomère, dans lequel l'au moins un cordon non sans fin comprend des filaments unidirectionnels non torsadés ; dans lequel l'au moins un cordon non sans fin ne comprend pas de métal ou de tissu ; et dans lequel l'au moins un cordon non sans fin comprend de la fibre de verre, de la fibre de carbone, de la fibre d'aramide, du coton, de la cellulose, du nylon, du polyester, du PET ou des combinaisons de ceux-ci ; et dans lequel l'au moins un cordon non sans fin est disposé uniaxialement.

12. Joint comprenant : i) un élément d'étanchéité comprenant un corps annulaire de matériau élastomère ; et (ii) un élément de renforcement selon n'importe quelle revendication précédente, éventuellement dans lequel le joint est un joint à lèvre rotatif ou un joint hydraulique.

13. Utilisation d'un segment d'un élément de renforcement selon l'une quelconque des revendications 1 à 11 dans la formation d'un élément de renforcement pour un joint.

14. Utilisation d'au moins un cordon non sans fin pour renforcer un élément de renforcement pour un joint, dans lequel l'élément de renforcement est selon l'une quelconque des revendications 1 à 11.
